# EUROPÄISCHE PATENTSCHRIFT

(11) **EP 3 675 299 B1**
(45) Veröffentlichungstag und Bekanntmachung des Hinweises auf die Patenterteilung: **15.09.2021**
(21) Anmeldenummer: 19213278.5
(22) Anmeldetag: 03.12.2019
(51) Int. Cl.: H02G 3/12

(54) **HOHLWANDDOSE MIT ANLEGEELEMENTEN**
HOLLOW WALL BOX WITH MOUNTING ELEMENTS
BOÎTIER MURAL CREUX POURVU D'ÉLÉMENTS D'APPUI

(30) Priorität: 28.12.2018 DE 102018133659
(43) Veröffentlichungstag der Anmeldung: 01.07.2020
(73) Patentinhaber: Schneider Electric Industries SAS, 92500 Rueil Malmaison (FR)
(72) Erfinder: Narayanan, Shree Ganesh, 51643 Gummersbach (DE); Kullolli, Dharmveer, 51674 Wiehl (DE)
(74) Vertreter: Herrmann, Jochen

(56) Entgegenhaltungen:
- EP-A1- 1 863 144
- DE-U1- 29 514 619
- SE-B- 462 248

## Beschreibung

Die Erfindung eine betrifft Hohlwanddose mit der Hohlwanddose zugeordneten Anlegeelementen zur Installation in einer Wandausnehmung einer Hohlwand, wobei ein Doseninnenraum von einer Dosenwand begrenzt ist, wobei die Dosenwand entlang der Umfangsrichtung der Hohlwanddose verlaufende erste Wandabschnitte und zweite Wandabschnitte aufweist, wobei an einem zweiten Wandabschnitt entlang der Umfangsrichtung der Hohlwanddose ein oder mehrere nach außen gerichtete Anlegeabschnitte mit Anlegeflächen angeordnet sind, wobei die Anlegeelemente jeweils eine gekrümmt verlaufende Außenfläche und der Außenfläche gegenüberliegend angeordnet eine Stoßfläche zur Anlage an einem Anlegeabschnitt an der Dosenwand der Hohlwanddose aufweisen, und wobei im Bereich der Anlegeabschnitte der Hohlwanddose jeweils ein oder mehrere erste Verbindungselemente angeordnet sind.

Eine als in Draufsicht ovale Doppeldose ausgebildete Hohlwanddose aus Kunststoff ist aus der DE 2012 00 03 U1 bekannt. EP 1863144 A1 und SE 462248 offenbaren Hohlwanddosen mit Anlegeelementen.

Die für elektrotechnische Installationen vorgesehene Hohlwanddose kann in einen Durchbruch einer Wand eingesetzt werden. Sie weist ihrer Öffnung zugewandt einen Flansch auf, der sich umlaufend zum Durchbruch an der Wand abstützt und damit die Einstecktiefe begrenzt. Die Dosenwand weist gekrümmt verlaufende und geradlinig verlaufende Wandabschnitte auf. Der Durchbruch der Wand ist entsprechend auszubilden, sodass seine Kontur den Wandabschnitten der Dosenwand folgt und die Hohlwanddose in den Durchbruch eingesetzt werden kann, wobei der an der Dosenwand angeformte Flansch den Rand des Durchbruchs zumindest abschnittsweise überdeckt. Die gekrümmt verlaufenden Bereiche des Durchbruchs können einfach durch zwei sich gegenseitig teilweise überlappende Bohrungen hergestellt werden. Nachteilig muss die zwischen den zwei Bohrungen ausgebildete Einschnürung entfernt und ein geradlinig verlaufende Übergang erzeugt werden, damit die Hohlwanddose mit ihren geradlinig verlaufenden Wandabschnitten in den Durchbruch eingesetzt werden kann.

Um Hohlwanddosen besser an einfach mittels Bohrungen herstellbare Geometrien anpassen zu können ist es bekannt, an gerade verlaufenden Wandabschnitten der Hohlwanddose Anlegeelemente anzuordnen, welche jeweils eine gekrümmte Außenfläche aufweisen. Diese geht stufenlos in die Oberfläche der Hohlwanddose an einem angrenzenden, gekrümmt verlaufenden Wandabschnitt über. Gegenüberliegend zu den gekrümmten Außenflächen bilden die Anlegeelemente Anlageflächen aus, mit denen sie an gerade verlaufenden Wandabschnitten der Hohlwanddose angelegt werden können. Die Anlegeelemente sind einstückig mittels jeweils einem Filmscharnier mit der Hohlwanddose verbunden. Beim Einschieben der Hohlwanddose in eine Wandausnehmung werden die Anlegeelemente mit ihren Anlageflächen an die Hohlwanddose herangeklappt und dadurch geeignet positioniert. In Einbausituationen, bei denen gerade verlaufende Wandabschnitte der Hohlwanddose erforderlich sind, beispielsweise wenn zwei oder mehrere Hohlwanddosen entlang der geraden Wandabschnitte miteinander verbunden werden sollen, müssen die Anlegeelemente von der Hohlwanddose entfernt werden. Dazu muss das Filmscharnier, beispielsweise mit einem Messer, durchtrennt werden.

Dies bedeutet einen zusätzlichen Arbeitsschritt. Nachteilig kann an der Hohlwanddose ein Rest des Filmscharniers verbleiben und einen Grat ausbilden. Dieser verhindert, dass zwei Hohlwanddosen exakt zueinander ausgerichtet aneinander gelegt werden können.

Es ist Aufgabe der Erfindung, eine einfach herstellbare und zu montierende Hohlwanddose mit Anlegeelementen bereitzustellen.

Die Aufgabe der Erfindung wird dadurch gelöst, dass an den Stoßflächen der Anlegeelemente jeweils ein oder mehrere zweite Verbindungselemente angeordnet sind und dass die Verbindungselemente dazu ausgebildet sind, die Anlegeelemente lösbar mit der Hohlwanddose zu verbinden, und dass zwei oder mehrere einstückig zu einer Anlegebaugruppe miteinander verbundene Anlegeelemente als Anlegebaugruppe mittels der Verbindungselemente an der Hohlwanddose befestigbar sind, und dass zwischen den Anlegeelementen einer Anlegebaugruppe jeweils zumindest eine Sollbruchstelle angeordnet ist. Mittels der Verbindungselemente können die Anlegeelemente bei Bedarf an den zweiten Wandabschnitten der Hohlwanddose befestigt oder wieder von diesen gelöst werden. Mit der Hohlwanddose verbundene Anlegeelemente ermöglichen durch ihre gekrümmt, vorzugsweise entlang einer Kreislinie verlaufenden Außenflächen die Anlage an einer gekrümmt, vorzugsweise kreisrund verlaufenden Seitenwandung der Wandausnehmung. Damit kann die Hohlwanddose exakt in durch Bohrungen hergestellten Wandausnehmungen platziert und befestigt werden.

Entsprechend einer besonders bevorzugten Ausgestaltungsvariante der Erfindung kann es vorgesehen sein, dass die ersten und zweiten Verbindungselemente dazu ausgebildet sind, in einer ersten Verwendung eine Verbindung zwischen zwei Hohlwanddosen und in einer zweiten Verwendung eine Verbindung zwischen einer Hohlwanddose und einem oder mehreren Anlegeelementen herzustellen. Die Verbindungselemente sind so ausgebildet, dass sie sowohl eine optimierte gegenseitige Ausrichtung und Verbindung zweier Hohlwanddosen miteinander wie auch eine optimierte Ausrichtung und Verbindung einer Hohlwanddose mit einer oder mehreren Anlegeelementen ermöglichen.

Eine einfach zu montierende und belastbare Verbindung zwischen einem Anlegeelement und der Hohlwanddose bzw. zwischen zwei Hohlwanddosen kann dadurch erreicht werden, dass die Verbindungselemente als Gleitführungselemente und dazu korrespondierende Gleitführungsgegenelemente ausgebildet sind, bevorzugt dass die Gleitführungselemente als Federn und die Gleitführungsgegenelemente als zu den Federn korrespondierende Nuten ausgebildet sind, besonders bevorzugt dass die Gleitführungselemente als Federn einer Schwalbenschwanzführung und die Gleitführungsgegenelemente als zu den Federn der Schwalbenschwanzführung korrespondierende Nuten der Schwalbenschwanzführung, ausgebildet sind. Die Gleitführungselemente und Gleitführungsgegenelemente ermöglichen es, dass die zu verbindenden Bauteile einfach aufeinandergeschoben werden können. Dabei sind aus Nuten und Federn gebildete Gleitführungselemente bzw. Gleitführungsgegenelemente einfach und kostengünstig herstellbar und anzuwenden. Schwalbenschwanzführungen blockieren eine relative Bewegung der verbundenen Bauteile quer zur Einschubrichtung, sodass die Bauteile sicher aneinander gehalten sind. Vorzugsweise können die Federn im Übermaß zu den Nuten ausgebildet sein. Es bilden sich so Presspassungen zwischen den Gleitführungselementen und den Gleitführungsgegenelementen aus, die ein unbeabsichtigtes Lösen der Verbindungen verhindern.

Ist es vorgesehen, dass die an der Hohlwanddose angeordneten ersten Gleitführungselemente und ersten Gleitführungsgegenelemente in Tiefenrichtung der Hohlwanddose derart ausgerichtet sind, dass die Anlegeelemente in Tiefenrichtung oder im Wesentlichen in Tiefenrichtung auf die Hohlwanddose aufschiebbar sind, so können die Anlegeelemente einfach von vorne oder von hinten auf die Hohlwanddose aufgeschoben werden. Vorteilhaft verlaufen bei einer derartigen Anordnung der ersten Gleitführungselemente bzw. ersten Gleitführungsgegenelemente die an den Anlegeelementen angeordneten, dazu korrespondierenden zweiten Gleitführungselemente bzw. zweiten Gleitführungsgegenelemente entlang von Bereichen gleicher oder zumindest annähernd gleicher Materialstärke der Anlegeelemente. Insbesondere als Nuten ausgebildete zweite Gleitführungsgegenelemente können so beispielsweise in einem mittleren Bereich des jeweiligen Anlegeelements, in dem aufgrund der Wölbung seiner Außenfläche die größte Materialstärke vorliegt, angeordnet werden.

Eine Drehsymmetrie der Hohlwanddose kann dadurch erreicht werden, dass in Umfangsrichtung der Hohlwanddose erste Gleitführungselemente und erste Gleitführungsgegenelemente abwechselnd angeordnet sind. Die Verbindung zwischen zwei Hohlwanddosen erfolgt entlang ihrer zweiten Wandabschnitte. Diese sind gegenüberliegend an der Hohlwanddose ausgebildet. Es ergeben sich somit zwei drehsymmetrische Ausrichtungen, in denen die Hohlwanddosen miteinander verbunden werden können. Durch die in Umfangsrichtung abwechselnde Anordnung der ersten Gleitführungselemente und ersten Gleitführungsgegenelemente können insbesondere Zwei- und Mehrfachdosen in beiden möglichen Dreh-Ausrichtungen miteinander verbunden werden.

Eine einfache Verbindung zweier oder mehrerer Hohlwanddosen wird ermöglicht, wenn vorgesehen ist, dass einem auf einer Seite der Hohlwanddose angeordneten ersten Gleitführungselement auf der gegenüberliegenden Seite der Hohlwanddose jeweils ein erstes Gleitführungsgegenelement gegenübergestellt ist. Es können so beliebig viele Hohlwanddosen aneinandergereiht werden.

Besonders bevorzugt kann es vorgesehen sein, dass auf einer Seite der Hohlwanddose benachbarte erste Gleitführungselemente und erste Gleitführungsgegenelemente in einem vorgegebenen Rastermaß zueinander beabstandet sind, vorzugsweise dass auf einer Seite der Hohlwanddose benachbarte erste Gleitführungselemente und erste Gleitführungsgegenelemente in einem Rastermaß von 71mm zueinander beabstandet sind. Die Position der ersten Gleitführungselemente und ersten Gleitführungsgegenelemente ist bei dieser Anordnung an die standardisierte Rasterung der Größe von Hohlwanddosen und dafür vorgesehenen Wandausnehmungen angepasst. Jedem entsprechend der Rasterung angeordneten Anlegeabschnitt einer Mehrfach-Hohlwanddose ist zumindest ein Gleitführungselement bzw. ein Gleitführungsgegenelement zugewiesen. Es können so beliebig große Hohlwanddosen, beispielsweise Zweifachund Dreifachdosen, miteinander kombiniert werden.

Eine einfache gegenseitige Ausrichtung zweier miteinander zu verbindenden Hohlwanddosen bzw. einer Hohlwanddose und eines daran festzulegenden Anlegeelements kann dadurch ermöglicht werden, dass als Federn ausgebildete erste Gleitführungselemente zum vorderen Rand der Hohlwanddose zurückgesetzt angeordnet sind und/oder dass als Nuten ausgebildete erste Gleitführungsgegenelemente zum vorderen Rand der Hohlwanddose hin jeweils in eine zum vorderen Rand der Hohlwanddose hin geöffnete Aussparung übergeleitet sind. Die zu verbindenden Bauteile können so an ihrem jeweiligen Rand aufeinander gelegt und durch Eingriff der Feder in die Aussparung zueinander ausgerichtet werden. Die derart zueinander ausgerichteten Gleitführungselemente und Gleitführungsgegenelemente können einfach und ohne zu verkannten ineinandergeschoben werden.

Eine exakte Positionierung der Anlegeelemente gegenüber der Hohlwanddose entlang von deren Tiefenrichtung kann dadurch erreicht werden, dass die Einschubbewegung der Anlegeelemente gegenüber der Hohlwanddose in Einschubrichtung durch Anschläge begrenzt ist.

Eine großflächige Kraftübertragung zwischen den Anlegeelementen und der Hohlwanddose wird erreicht, wenn vorgesehen ist, dass die Anlegeabschnitte der Hohlwanddose jeweils zumindest eine, vorzugsweise eben ausgebildete Anlegefläche ausbilden, dass die Anlegeelemente dazu jeweils zumindest eine korrespondierende Stoßfläche ausbilden und dass die Verbindungselemente an den Anlegeflächen und Stoßflächen vorzugsweise derart angeordnet sind, dass die Stoßflächen plan auf den Anlegeflächen aufliegen und/oder federelastisch gegenüber diesen abgestützt sind. Durch die großflächige Kraftübertragung wird eine Verformung der Hohlwanddose vermieden oder zumindest gering gehalten. Die federelastische Abstützung ermöglicht den Ausgleich von Toleranzen.

Eine einfache Ausrichtung der Anlegeelemente gegenüber der Hohlwanddose sowie ein zusätzlicher Formschluss in Umfangsrichtung können dadurch erreicht werden, dass die Anlegeflächen der Hohlwanddose in Neigungsflächen übergeleitet sind und dass die zu den Anlegeflächen der Hohlwanddose korrespondierenden Stoßflächen der Anlegeelemente in zu den Neigungsflächen der Hohlwanddose korrespondierende Neigungsflächen übergeleitet sind. Ein Anlegeelement liegt somit mit seiner Stoßfläche und der geneigt dazu angeordneten, korrespondierenden Neigungsfläche an der Anlegefläche und der Neigungsfläche eines Anlegeabschnitts der Hohlwanddose an. Dabei ist eine Bewegung des Anlegeelements in Umfangsrichtung entlang des ersten Wandabschnitts durch die schräg gestellten Neigungsflächen blockiert.

Um die Anlegeelemente auch in und entgegen ihrer zur Befestigung an der Hohlwanddose vorgesehenen Einschubrichtung an der Hohlwanddose festzulegen kann es vorgesehen sein, dass an den Anlegeelementen jeweils zumindest ein Rastelement und an den Anlegeabschnitten jeweils zumindest ein dazu korrespondierendes Gegenrastelement angeordnet ist.

Das Einrasten der Rastelemente in die Gegenrastelemente als Abschluss der Einschubbewegung des Anlegeelements kann dadurch ermöglicht oder vereinfacht werden, dass zu dem zumindest einen Rastelement und/oder dem zumindest einen Gegenrastelement eine in Einschubrichtung der Verbindungselemente gerichtete Anlaufschräge geführt ist.

Ist es vorgesehen, dass das zumindest eine Rastelement von der Außenfläche des jeweiligen Anlegeelements zugängig ist, so kann die Rastverbindung zwischen dem Anlegeelement und der Hohlwanddose einfach gelöst werden.

Eine vereinfachte Montage von benachbart vorgesehenen Anlegeelementen an die Hohlwanddose wird dadurch erreicht, dass zwei oder mehrere einstückig zu einer Anlegebaugruppe miteinander verbundene Anlegeelemente als Anlegebaugruppe mittels der Verbindungselemente an der Hohlwanddose befestigbar sind. Es können so in einem Arbeitsschritt mehrere Anlegeelemente mit der Hohlwanddose verbunden werden.

Es ist vorgesehen, dass zwischen den Anlegeelementen einer Anlegebaugruppe jeweils zumindest eine Sollbruchstelle angeordnet ist. Einzelne Anlegeelemente oder eine gewünschte Anzahl an Anlegeelementen können so einfach von der Anlegebaugruppe abgetrennt separiert und mit der Hohlwanddose verbunden werden.

Ein passgenauer Einbau der Hohlwanddose in eine aus kreisrunden Bohrungen hergestellte Wandausnehmung kann dadurch erreicht werden, dass die Außenflächen der Anlegeelemente die gleiche Krümmung aufweisen wie der gekrümmt verlaufende erste Wandabschnitt der Hohlwanddose und/oder dass die äußere Oberfläche eines gekrümmt verlaufenden ersten Wandabschnitts vorzugsweise stufenlos in die Außenfläche eines angrenzend an den ersten Wandabschnitt mit der Hohlwanddose verbundenen Anlegeelements übergeleitet ist.

Entsprechend einer bevorzugten Erfindungsvariante kann es vorgesehen sein, dass in Tiefenrichtung der Hohlwanddose beabstandet zu wenigstens einem der Anlegeabschnitte eine zu öffnende Durchführung an der Dosenwand vorgefertigt ist, dass die Durchführung von Wandelementen zumindest bereichsweise umgeben ist, dass die Wandelemente um die Durchführung herum Abschlussflächen aufweisen, die auf einer Ebene liegen und die vorzugsweise in die Anlegeflächen übergehen, die besonders bevorzugt auf der gleichen Ebene liegen. Bei mittels der Verbindungselemente aneinander gereihten Hohlwanddosen stehen sich die Durchführungen benachbarter Hohlwanddosen zueinander fluchtend gegenüber. Durch diese können Kabel zwischen den Hohlwanddosen verlegt werden. Die Kabel sind dabei zumindest bereichsweise von den Wandelementen umgeben und dadurch geschützt angeordnet. Liegen die Abschlussflächen der Wandelemente in einer Ebene mit den Anlegeflächen der Hohlwanddose, so stoßen die Abschlussflächen miteinander verbundener Hohlwanddosen aneinander an. Es ist damit innerhalb der Wandelemente eine geschlossene oder nahezu geschlossene Durchführung zwischen den Hohlwanddosen ausgebildet.

Die Erfindung wird im Folgenden anhand der in den Zeichnungen dargestellten Ausführungsbeispiele näher erläutert. Es zeigen:
- Fig. 1: in einer perspektivischen Darstellung mit Blick auf die Vorderseite eine Hohlwanddose mit zur Befestigung an der Hohlwanddose ausgerichteten Anlegeelementen,
- Fig. 2: in einer perspektivischen Darstellung mit Blick auf die Vorderseite die in Fig. 1 gezeigte Hohlwanddose mit den daran befestigten Anlegeelementen,
- Fig. 3: in einer Vorderansicht die in Fig. 2 gezeigte Hohlwanddose mit den daran befestigten Anlegeelementen,
- Fig. 4: in einer perspektivischen Darstellung mit Blick auf die Vorderseite die zur Montage in einer Wandausnehmung ausgerichtete, in Fig. 2 gezeigte Hohlwanddose,
- Fig. 5: in einer perspektivischen Darstellung mit Blick auf die Vorderseite die in Fig. 2 gezeigte Hohlwanddose nach Festlegung in der in Fig. 4 gezeigten Wandausnehmung,
- Fig. 6: in einer Vorderansicht die in Fig. 5 gezeigte Hohlwanddose,
- Fig. 7: in einer perspektivischen Darstellung mit Blick auf die Vorderseite zwei miteinander zu verbindende Hohlwanddosen,
- Fig. 8: in einer Rückansicht drei miteinander verbundene und in eine Wandausnehmung eingesetzte Hohlwanddosen und
- Fig. 9: in einer perspektivischen Ansicht von der Rückseite die in Fig. 8 gezeigten Hohlwanddosen.

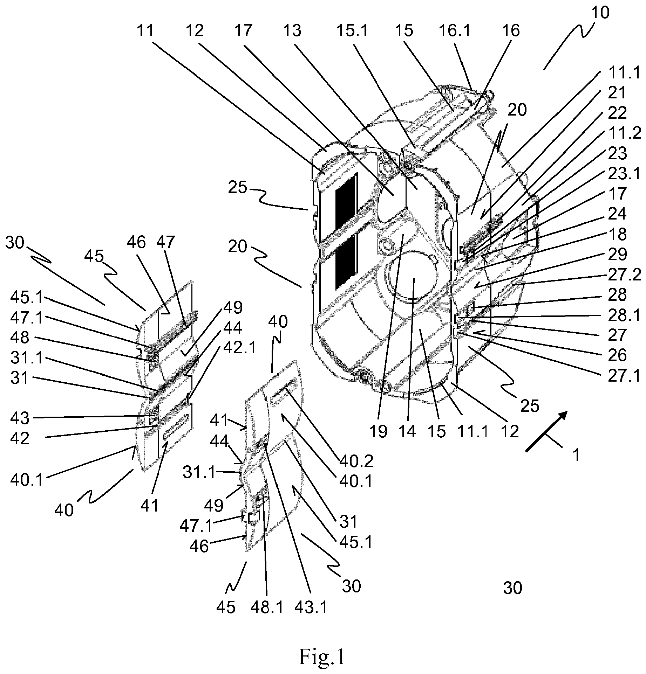

Fig. 1 zeigt in einer perspektivischen Darstellung mit Blick auf die Vorderseite eine Hohlwanddose 10 mit zur Befestigung an der Hohlwanddose 10 ausgerichteten Anlegeelementen 40, 45. Die Hohlwanddose 10 ist vorliegend und beispielhaft als Zweierdose ausgebildet. Die Erfindung umfasst jedoch auch Einzeldosen oder größere Mehrfachdosen. Bei Bedarf wird in der nachfolgenden Beschreibung auf Besonderheiten solcher Einzel- und Mehrfachdosen eingegangen.

Ein zu ihrer Vorderseite hin geöffneter Innenraum der Hohlwanddose 10 ist von einer umlaufenden Dosenwand 11 eingefasst. Die Dosenwand 11 teilt sich in erste und zweite Wandabschnitte 11.1, 11.2 auf. Die ersten Wandabschnitte 11.1 sind gekrümmt ausgebildet. Sie verlaufen vorliegend jeweils entlang einer gedachten Kreislinie. Zwischen zwei gegenüberliegend angeordneten ersten Wandabschnitten 11.1 erstrecken sich die zweiten Wandabschnitte 11.2. Diese sind vorwiegend geradlinig verlaufend ausgebildet. Auf ihrer Rückseite ist die Hohlwanddose 10 durch einen Boden 13 abgeschlossen. In den Boden 13 und in schräg von dem Boden 13 zu der Dosenwand 11 verlaufenden Übergangsbereichen sind Kabeldurchführungen 14 vorgefertigt. Die Kabeldurchführungen 14 weisen umlaufende Sollbruchstellen auf und können bei Bedarf in bekannter Weise geöffnet werden. Zur Vorderseite der Hohlwanddose 10 hin ist ein Flansch 12 an die Dosenwand 11 angeformt. Der Flansch 12 ist im Winkel zu der Dosenwand 11 nach außen weisend ausgerichtet.

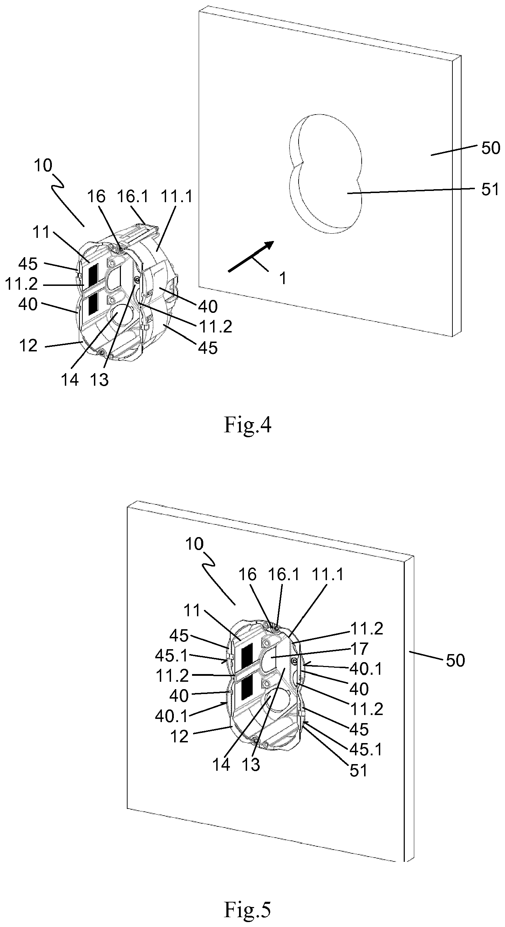

Ein Pfeil gekennzeichnet eine Tiefenrichtung 1 der Hohlwanddose 10. Die Tiefenrichtung 1 ist von der Öffnung der Hohlwanddose 10 zu deren Boden 13 gerichtet. Sie entspricht der Einschubrichtung der Hohlwanddose 10 in eine Wandausnehmung 51 an einer Wand 50, wie diese in Fig. 4 gezeigt sind.

Die Hohlwanddose 10 ist, abgesehen von daran angeordneten Schrauben 16 und Klemmlaschen 16.1, als Kunststoffbauteil gefertigt. Die Schrauben 16 sind entlang der Tiefenrichtung 1 an der Außenseite der Dosenwand 11 ausgerichtet durch eine Schraubenführung 15.1 gehalten. Dabei sind die Schrauben 16 jeweils in einer im Bereich der ersten Wandabschnitte 11.1 von außen in die Dosenwand 11 eingeformten Schraubenaufnahme 15 angeordnet. An ihrem dem Schraubenkopf gegenüberliegenden Endbereich ist die Klemmlasche 16.1 auf die Schraube 16 aufgeschraubt. Die Klemmlasche 16 ist in einer Ruheposition unterhalb des Bodens 13 der Hohlwanddose 10 gehalten.

Im hinteren Teil der Hohlwanddose 10 sind in Tiefenrichtung 1 ausgerichtete Schraubenansätze 19 an die Dosenwand 11 und den Boden 13 angeformt. Sie dienen der Aufnahme von Befestigungsschrauben, beispielsweise zur Festlegung von in der Hohlwanddose 10 angeordneten, nicht gezeigten Installationsgeräten.

Entlang der zweiten Wandabschnitte 11.2 sind in Umfangsrichtung der Hohlwanddose 10 einander abwechselnd erste und zweite Anlegeabschnitte 20, 25 angeordnet. Auf den gegenüberliegenden Wandabschnitten 11.2 stehen sich jeweils ein erster und ein zweiter Anlegeabschnitt 20, 25 gegenüber. Die Anlegeabschnitte 20, 25 sind zur Außenseite der Hohlwanddose 20 hin ausgerichtet. Jeder Anlegeabschnitt 20, 25 bildet eine Anlegefläche 21, 26 aus. Diese sind vorliegend eben ausgeführt. Die Anlegeflächen 21, 26 gehen quer zur Tiefenrichtung 1 der Hohlwanddose 10 in schräg zu den Anlegeflächen 21, 26 geneigte Neigungsflächen 24, 29 über. Die Neigungsflächen 24, 29 auf einem zweiten Wandabschnitt 11.2 benachbarter erster und zweiter Anlegeabschnitte 20, 25 sind einander zugewandt. Sie sind gegenüber den Anlegeflächen 21, 26 zur Hohlwanddose 10 hin geneigt. Zwischen den Neigungsflächen 24, 29 ist ein Zwischenbereich 18 ausgebildet.

Mit jedem Anlegeabschnitt 20, 25 ist ein Verbindungselement verbunden. Die Verbindungselemente sind als erste Gleitführungselemente 22 und als dazu korrespondierende erste Gleitführungsgegenelemente 27 ausgeführt. Sie sind in Tiefenrichtung 1 ausgerichtet. Vorliegend sind die ersten Gleitführungselemente 22 als Federn und die ersten Gleitführungsgegenelemente 27 als Nuten einer Schwalbenschwanzführung ausgebildet.

Die als Federn ausgebildeten ersten Gleitführungselemente 22 erheben sich jeweils über die erste Anlegefläche 21 eines ersten Anlegeabschnitts 20. Die als Nuten ausgeführten ersten Gleitführungsgegenelemente 27 sind jeweils in die zweite Anlegefläche 26 eines zweiten Anlegeabschnitts 25 eingeformt. Gegenüber dem vorderen Rand der Hohlwanddose 10 sind die ersten Gleitführungselemente 22 zurückgesetzt angeordnet. Die ersten Gleitführungsgegenelemente 27 gehen zur Vorderseite der Hohlwanddose 10 hin jeweils in eine Aussparung 27.1 und gegenüberliegend in einen Einfädelbereich 27.2 über. In der Aussparung 27.1 und dem Einfädelbereich 27.2 ist keine Schwalbenschwanzführung ausgebildet.

Seitlich der ersten Gleitführungselemente 22 und ersten Gleitführungsgegenelemente 27 sind Gegenrastelemente 23, 28 in die jeweiligen Anlegeflächen 21, 26 eingeformt. Die Gegenrastelemente 23, 28 sind im vorderen Bereich der Hohlwanddose 10 angeordnet. Zum vorderen Rand der Hohlwanddose 10 hin ist jedem Gegenrastelement 23, 28 eine Anlaufschräge 23.1, 28.1 zugeordnet. Die Anlaufschrägen 23.1, 28.1 sind gegenüber den Anlegeflächen 21, 26 geneigt in diese eingeformt. Die Neigung ist in Tiefenrichtung 1 zu den Anlegeflächen 21, 26 hin ansteigend ausgebildet.

In Tiefenrichtung 1 beabstandet zu den ersten und den zweiten Anlegeabschnitten 20, 25 ist jeweils eine Durchführung 17 an den ersten Wandabschnitten 11.1 vorgefertigt. Die Durchführungen 17 weisen jeweils eine umlaufende Sollbruchstelle auf und können bei Bedarf geöffnet werden. An ihrem Rand sind die Durchführungen 17 abschnittsweise von Wandelementen eingefasst. Die Wandelemente sind derart ausgebildet, dass sie mit ihren äußeren Abschlussflächen in einer Ebene mit den angrenzenden Anlegeflächen 21, 26 abschließen. Der nach außen gerichtete Rand eine Durchführung 17 ist somit vollständig oder nahezu vollständig in der Ebene der Anlegeflächen 21, 26 angeordnet.

Der Hohlwanddose 10 gegenübergestellt sind die ersten und zweiten Anlegeelemente 40, 45 dargestellt. Die Anlegeelemente 40, 45 sind aus Kunststoff gefertigt. Jeweils ein erstes und ein zweites Anlegeelemente 40, 45 sind mittels eines Verbindungsabschnittes 31 einstückig zu einer Anlegebaugruppe 30 verbunden. Entlang des Verbindungsabschnitts 31 ist eine Kerbe 31.1 in diesen eingeformt. Die miteinander verbundenen Anlegeelemente 40, 45 können einfach entlang dieser Kerbe 31.1 separiert werden.

Nach außen gerichtet weisen die Anlegeelemente 40, 45 jeweils eine gekrümmt verlaufende Außenfläche 40.1, 45.1 auf. Die Krümmung der Außenflächen 40.1, 45.1 entspricht vorteilhaft der Krümmung der ersten Wandabschnitte 11.1 der Hohlwanddose 10. Gegenüberliegend zu den Außenflächen 40.1, 45.1 bilden die Anlegeelemente 40, 45 Stoßflächen 41, 46 und zu den Neigungsflächen 24, 29 der Hohlwanddose 10 korrespondierende Neigungsflächen 44, 49 aus. Die korrespondierenden Neigungsflächen 44, 49 sind im Winkel zu den Stoßflächen 41, 46 angeordnet. Dabei schließen sich die korrespondierende Neigungsflächen 44, 49 zum Verbindungsabschnitt 31 hin weisend an die jeweiligen Stoßflächen 41, 46 an. Die erste Stoßfläche 41 und die angrenzende erste korrespondierende Neigungsfläche 44 des ersten Anlegeelements 40 ist komplementär zu der zweiten Anlegefläche 26 und der zweiten Neigungsflächen 29 des zweiten Anlegeabschnitts der Hohlwanddose 10 25 ausgebildet. Entsprechend sind die zweite Stoßfläche 46 und die angrenzende zweite korrespondierende Neigungsfläche 49 des zweiten Anlegeelements 45 komplementär zu der ersten Anlegefläche 21 und der ersten Neigungsflächen 24 des ersten Anlegeabschnitts 20 der Hohlwanddose 10 geformt.

An den Stoßflächen 41, 46 ist jeweils ein Verbindungselement angeformt. Die Verbindungselemente sind als zweite Gleitführungselemente 47 und zweite Gleitführungsgegenelemente 42 ausgebildet. Die zweiten Gleitführungselemente 47 sind als Federn, vorliegend einer Schwalbenschwanzführung, ausgeführt. Die zweiten Gleitführungsgegenelemente 42 sind als zu zweiten Gleitführungselementen 47 korrespondierende Nuten, vorliegend einer Schwalbenschwanzführung, ausgeführt. Die zweiten Gleitführungselemente 47 sind weiterhin komplementär zu den ersten Gleitführungsgegenelemente 27 und die zweiten Gleitführungsgegenelemente 42 komplementär zu den ersten Gleitführungselementen 22 an der Hohlwanddose 10 ausgebildet. Die zweiten Gleitführungsgegenelemente 42 sind jeweils einstückig an einem ersten Anlegeelemente 40 und die zweiten Gleitführungselemente 42 jeweils einstückig an einem zweiten Anlegeelemente 45 angeformt.

Der Hohlwanddose 10 abgewandt ist das als Nut ausgebildete zweite Gleitführungsgegenelement 42 in Führungsrichtung verschlossen. Gegenüberliegend geht das zweite Gleitführungsgegenelement 42 in eine zur Hohlwanddose 10 hin offene Führungsaussparung 42.1 über. Im Bereich der Führungsaussparung 42.1 ist keine Schwalbenschwanzführung ausgebildet.

An dem der Hohlwanddose 10 abgewandten Ende des als Feder ausgebildeten zweiten Gleitführungselements 47 ist ein Anschlagelement 47.1 angeformt.

Seitlich neben den zweiten Gleitführungselementen 47 und den zweiten Gleitführungsgegenelementen 42 ist jeweils ein Rastelement 43, 48 in die zugeordneten Stoßflächen 41, 46 eingeformt. Die Rastelemente 43, 48 sind korrespondierend zu den Gegenrastelemente 23, 28 an den Anlegeabschnitten 20, 25 der Hohlwanddose 10 ausgebildet. Ausgehend von den Außenflächen 40.1, 45.1 schaffen Zugänge 43.1, 48.1 Zugang zu den Rastelementen 43, 48.

In das erste Anlegeelemente 40 ist ein als Langloch ausgebildeter Durchbruch 40.2 eingeformt, welcher von der ersten Außenfläche 40.1 zu der ersten Stoßfläche 41 geführt ist.

Die Anlegeelemente 40, 45 sind zur Montage an der Hohlwanddose 10 gegenüber dieser ausgerichtet. In dieser Ausrichtung sind die zweiten Gleitführungselemente 47 und zweiten Gleitführungsgegenelemente 42 entlang der Tiefenrichtung 1 ausgerichtet.

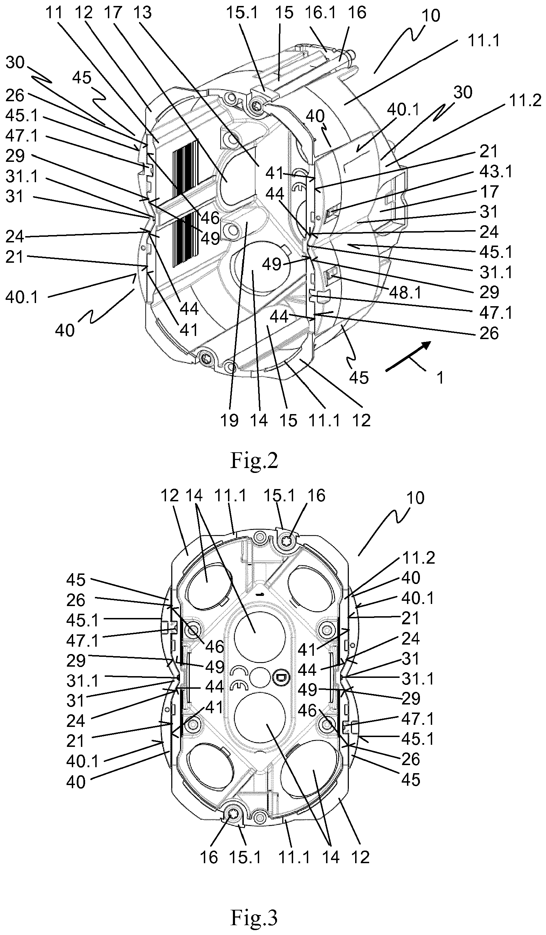

Fig. 2 zeigt in einer perspektivischen Darstellung mit Blick auf die Vorderseite die in Fig. 1 gezeigte Hohlwanddose 10 mit den daran befestigten Anlegeelementen 40, 45.

Fig. 3 zeigt in einer Vorderansicht die in Fig. 2 gezeigte Hohlwanddose 10 mit den daran befestigten Anlegeelementen 40, 45.

Ausgehend von der Darstellung in Fig. 1 sind die Anlegeelemente 40, 45 entlang der Tiefenrichtung 1 auf die Hohlwanddose 10 aufgeschoben. Dazu sind die der Hohlwanddose 10 zugewandten Oberflächen, Verbindungselemente und ersten Rastelemente 43 der ersten Anlegeelemente 20 korrespondierend zu den Oberflächen, Verbindungselementen und ersten Gegenrastelementen 23 der ersten Anlegeabschnitte 20 an der Hohlwanddose 10 ausgebildet. Entsprechend sind die der Hohlwanddose 10 zugewandten Oberflächen, Verbindungselemente und zweiten Rastelemente 48 der zweiten Anlegeelemente 25 korrespondierend zu den Oberflächen, Verbindungselementen und zweiten Gegenrastelementen 28 der zweiten Anlegeabschnitte 20 an der Hohlwanddose 10 ausgebildet.

In dem gezeigten Ausführungsbeispiel einer als Doppeldose ausgebildeten Hohlwanddose 10 können die Anlegeelemente 40, 45 im Verbund als Anlegebaugruppe 30 an jeweils einem zweiten Wandabschnitt 11.2 befestigt werden. Zur Festlegung an einer Einzeldose müssen die Anlegeelemente 40, 45 einer Anlegebaugruppe 30 entlang der dafür vorgesehenen Kerbe 31.1 am Verbindungsabschnitt 31 getrennt und einzeln auf die Hohlwanddose 10 aufgesteckt werden. Bei Mehrfachdosen mit geradzahligem Rastermaß können alle Anlegeabschnitte 20, 25 mit Anlegebaugruppen 30 bestückt werden. Bei Mehrfachdosen mit ungeradzahligem Rastermaß ist an einem zweiten Wandabschnitt zumindest ein separiertes Anlegeelemente 40, 45 vorzusehen.

Zur Herstellung der Verbindungen werden zunächst die Anlegeelemente 40, 45 bzw. die Anlegebauguppe 30 mit jeweils ihrem in Tiefenrichtung 1 vorderen Rand im Bereich der zweiten Wandabschnitte 11.2 auf den ihnen zugewandten vorderen Rand der Hohlwanddose 10 angelegt. Quer zur Tiefenrichtung 1 werden die Anlegeelemente 40, 45 oder die Anlegebaugruppe 30 dabei durch ihre an den Neigungsflächen 24, 29 der Anlegeabschnitte 20, 25 anliegenden, korrespondierende Neigungsflächen 44, 49 ausgerichtet. Der vordere Bereich des zweiten Gleitführungselements 47 am zweiten Anlegeelement 45 greift in die Aussparung 27.1 in Verlängerung des ersten Gleitführungsgegenelements 27 an der Hohlwanddose 10 ein. Der vordere Bereich des ersten Gleitführungselements 22 der Hohlwanddose 10 greift in die Führungsaussparung 42.1 in Verlängerung des zweiten Gleitführungsgegenelementen 42 des ersten Anlegeelements 40 ein. Derart zur Hohlwanddose 10 ausgerichtet können die Anlegeelemente 40, 45 entlang der Tiefenrichtung 1 auf die Hohlwanddose 10 aufgeschoben werden. Dabei wird jeweils das erste Gleitführungselement 22 eines ersten Anlegeabschnitts 20 in das zweite Gleitführungsgegenelemente 42 eines ersten Anlegeelements 40 und das zweite Gleitführungselement 47 eines zweiten Anlegeelements 45 in das erste Gleitführungsgegenelemente 27 eines zweiten Anlegeabschnitts 25 eingeschoben. Die an den Anlegeelementen 40, 45 angeordneten Rastelemente 43, 48 werden dabei entlang der Anlaufschrägen 23.1, 28.1 zu den Gegenrastelementen 23, 28 an den Anlegeabschnitten 20, 25 geführt und durch die Anlaufschrägen 23.1, 28.1 ausgelenkt, bis sie am Ende der Einschubbewegung in die Gegenrastelemente 23, 28 einrasten. Die Anlegeelemente 40, 45 sind jetzt durch den Eingriff der Gleitführungselemente 22, 47 in die Gleitführungsgegenelemente 27, 42 an der Hohlwanddose 10 gehalten. Eine Bewegung der Anlegeelemente 40, 45 entlang der Führungsrichtung der Gleitführungen ist durch den Eingriff der Rastelemente 43, 48 in die Gegenrastelemente 23, 28 blockiert.

Die Anlegeelemente 40, 45 liegen mit ihren Stoßflächen 41, 46 und korrespondierenden Neigungsflächen 44, 49 jeweils großflächig an den Anlegeflächen 21, 26 und Neigungsflächen 24, 29 der Anlegeabschnitte 20, 25 an. Auf die Außenflächen 40.1, 45.1 der Anlegeelemente 40, 45 einwirkende Kräfte, wie sie beispielsweise beim Einsetzen der Hohlwanddose 10 in eine Wandausnehmung 51 auftreten können, werden entsprechend großflächig auf den zweiten Wandabschnitt 11.2 der Hohlwanddose 10 übertragen. Eine Verformung des zweiten Wandabschnitts 11.2 kann so vermieden oder zumindest gering gehalten werden. Es ist denkbar, die Stoßflächen 41, 46 federelastisch gegenüber den Anlegeflächen 21, 26 und/oder die Neigungsflächen 24, 29 federelastisch gegenüber den dazu korrespondierenden Neigungsflächen 44, 49 abzustützen, um Toleranzen auszugleichen.

Zum Lösen eines Anlegeelements 40, 45 von der Hohlwanddose 10 kann ein geeignetes Werkzeug durch den jeweiligen Zugang 43.1, 48.1 zu dem Rastelement 43, 48 geführt und die Rastverbindung gelöst werden. Das Anlegeelemente 40, 45 kann jetzt entgegen der Tiefenrichtung 1 von der Hohlwanddose 10 abgeschoben werden.

Fig. 4 zeigt in einer perspektivischen Darstellung mit Blick auf die Vorderseite die zur Montage in der Wandausnehmung 51 ausgerichtete, in Fig. 2 gezeigte Hohlwanddose 10.

Die Wandausnehmung 51 ist durch zwei sich überlappende Bohrungen gebildet. Die Bohrungen sind in einem vorgegebenen Rastermaß von 71 mm zueinander versetzt. Im Übergang der beiden Bohrungen ist die Breite der Wandausnehmung 51 entsprechend dem Verlauf der Bohrungsränder reduziert.

Durch die an den geradlinig verlaufenden, zweiten Wandabschnitten 11.2 angeordneten Anlegeelemente 40, 45 ist auch in diesen Bereichen der Hohlwanddose 10 entsprechend der Außenflächen 40.1, 45.1 der Anlegeelemente 40, 45 eine gebogene äußere Oberfläche ausgebildet. Die Außenflächen 40.1, 45.1 der mit der Hohlwanddose 10 verbundenen Anlegeelemente 40, 45 gehen stufenfrei in die äußere Oberfläche der angrenzenden ersten Wandabschnitte 11.1 über. Die Krümmung der Außenflächen 40.1, 45.1 der Anlegeelemente 40, 45 entspricht der Krümmung der ersten Wandabschnitte 11.1. Die äußere Kontur der Hohlwanddose 10 mit den daran festgelegten Anlegeelementen 40, 45 folgt demnach der Kontur der Wandausnehmung 51.

Fig. 5 zeigt in einer perspektivischen Darstellung mit Blick auf die Vorderseite die in Fig. 2 gezeigte Hohlwanddose 10 nach Festlegung in der in Fig. 4 gezeigten Wandausnehmung 51.

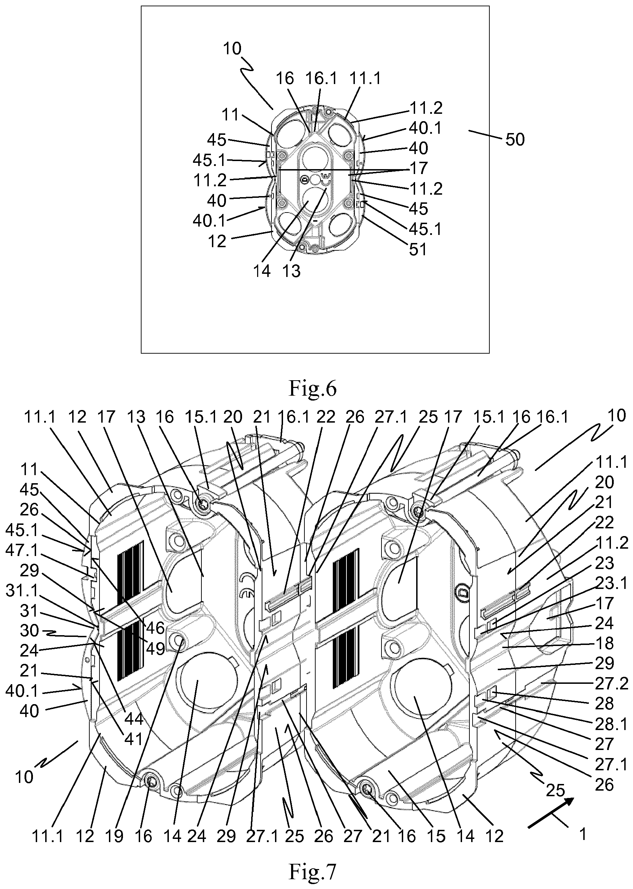

Fig. 6 zeigt in einer Vorderansicht die in Fig. 5 gezeigte Hohlwanddose 10.

Die Hohlwanddose 10 ist, ausgehend von der in Fig. 4 gezeigten Anordnung, entlang der Tiefenrichtung 1 bis zum Anschlag des Flansches 12 an der Wand 50 in die Wandausnehmung 51 eingeschoben. Die ersten Wandabschnitte 11.1 und die Außenflächen 40.1, 45.1 der mit der Hohlwanddose 10 verbundenen Anlegeelemente 40, 45 liegen an der Innenfläche der die Wandausnehmung 51 bildenden Bohrungen an oder sind gering gegenüber dieser beabstandet. Dadurch ist eine exakte Positionierung der Hohlwanddose 10 erreicht. Vorteilhaft ist kein oder nur ein geringer Spalt zwischen den ersten Wandabschnitten 11.1 und den Außenflächen der Anlegeelemente 40, 45 auf der einen Seite und den Innenflächen der die Wandausnehmung 51 bildenden Bohrungen auf der anderen Seite ausgebildet. Ein unerwünschter Luftzug durch die Wandausnehmung 51 und vorbei an der Hohlwanddose 10, beispielsweise in einen Innenraum eines Gebäudes, kann so vermieden oder zumindest gering gehalten werden.

Fig. 7 zeigt in einer perspektivischen Darstellung mit Blick auf die Vorderseite zwei miteinander zu verbindende Hohlwanddosen 10. Die Hohlwanddosen 10 liegen in Tiefenrichtung 1 versetzt zueinander entlang zweier zweiten Wandabschnitten 11.2 aneinander an. Dabei ist ein erstes Gleitführungselement 22 des ersten Anlegeabschnitts 20 der vorstehenden Hohlwanddose 10 in die Aussparung 27.1 in Verlängerung des ersten Gleitführungsgegenelements 27 an dem zweiten Anlegeabschnitts 25 der zurückgesetzten Hohlwanddose 10 eingeführt. Verdeckt angeordnet greift der vordere Bereich des ersten Gleitführungselements 22 der zurückgesetzten Hohlwanddose 10 in den Einfädelbereich 27.2, welcher in Verlängerung des ersten Gleitführungsgegenelements 27 ausgebildet ist, ein. Die Hohlwanddosen 10 sind auf diese Weise exakt zueinander ausgerichtet und können durch eine Schubbewegung entlang der Tiefenrichtung 1 miteinander verbunden werden.

Gegenüberliegend zu der zurückgesetzten Hohlwanddose 10 sind Anlegeelemente 40, 45 mit der vorstehenden Hohlwanddose 10 verbunden. An der freien Seite der zurückgesetzten Hohlwanddose 10 sind keine Anlegeelemente 40, 45 vorgesehen. An ihr kann eine weitere Hohlwanddose 10 befestigt werden.

Es ist denkbar, die Gleitführungselemente 22, 47 gegenüber den Gleitführungsgegenelementen 27, 42 in einem Übermaß herzustellen. Die Gleitführungen bilden so jeweils eine Presspassung aus, sodass ein gewisser Kraftaufwand erforderlich ist, um die miteinander verbundenen Hohlwanddosen 10 bzw. die Anlegeelemente 40, 45 und die Hohlwanddose 10 voneinander zu lösen.

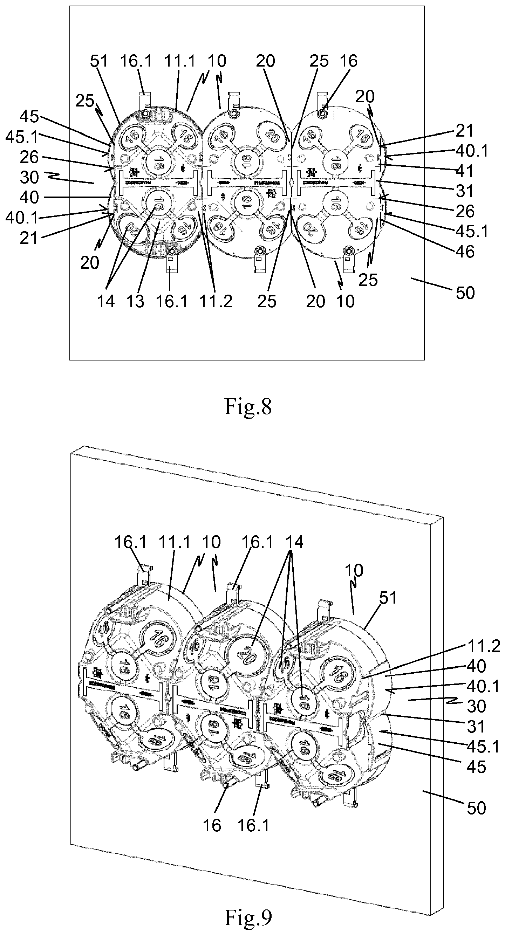

Fig. 8 zeigt in einer Rückansicht drei miteinander verbundene und in eine Wandausnehmung 51 eingesetzte Hohlwanddosen 10 und Fig. 9 in einer perspektivischen Ansicht von der Rückseite die in Fig. 8 gezeigten Hohlwanddosen 10.

Wie den beiden Figuren zu entnehmen ist, sind jeweils drei miteinander verbundene Hohlwanddosen 10 in die dafür vorgesehene Wandausnehmung 51 der Wand 50 eingesetzt. An den beiden äußeren Hohlwanddosen 10 sind der mittleren Hohlwanddose 10 abgewandt Anlegeelemente 40, 45 befestigt.

Die Wand 50 ist als Hohlwand, vorliegend als Trockenbauwand, ausgebildet. Die Wandausnehmung 51 ist aus sich überlappenden Bohrungen gebildet. Dabei sind die Bohrungen in einem vorgegebenen Rastermaß, insbesondere in einem Rastermaß von 71 mm, zueinander versetzt. Die miteinander verbundenen Hohlwanddosen 10 weisen das gleiche Rastermaß auf. Sie sind, wie in den Fig. 4 bis 6 anhand einer einzelnen Hohlwanddose 10 gezeigt, bis zum Anschlag ihres Flansches 12 an der Vorderseite der Wand 50 in die Wandausnehmung 51 eingesteckt. Die Gehäuse der Hohlwanddosen 10 ragen somit rückseitig über die Trägerplatte der Wand 50 hinaus. Die Hohlwanddosen 10 sind mittels der Klemmlaschen 16.1 in bekannter Weise an der Wand 50 festgelegt.

Die Hohlwanddosen 10 liegen mit ihren ersten Wandabschnitten 11.1 und den Außenflächen 40.1, 45.1 der mit den äußeren Hohlwanddosen 10 verbundenen Anlegeelemente 40, 45 an den Bohrflächen der Wandausnehmung 51 an. Die Hohlwanddosen 10 sind dadurch exakt ausgerichtet und seitlich geführt an der Wand 50 angeordnet. Die Kabeldurchführungen 14 sind von beiden Seiten der Wand 50 zugängig und können zum Einführen von Kabeln nach Bedarf geöffnet werden.

Die in Fig. 1 gezeigten Durchführungen 17 der miteinander verbundenen Hohlwanddosen 10 sind zueinander fluchtend ausgerichtet. Zur Rückseite der Hohlwanddosen 10 hin sind die Durchführungen 17 von den Wandelementen begrenzt, welche entlang von Abschlussflächen aneinander stoßen. Die Abschlussflächen sind in der gleichen Ebene wie die Anlegeflächen 21, 26 angeordnet. Die mittels der Durchführungen 17 zwischen zwei verbundenen Hohlwanddosen 10 ausgebildeten Übergänge sind somit zur Dosenaußenseite hin vollständig oder nahezu vollständig eingehaust. Durch die Durchführungen 17 zwischen den Hohlwanddosen 10 verlegte Kabel sind entsprechend geschützt angeordnet.

Die beschriebenen Verbindungselemente ermöglichen sowohl die Verbindung zweier oder mehrerer Hohlwanddosen 10 untereinander als auch die Verbindung eines Anlegeelements 40, 45 mit einer Hohlwanddose 10. Es ergibt sich so ein modulares vielseitiges System, welches die einfache Ausbildung unterschiedlichster Anordnungen von Hohlwanddosen 10 ermöglicht. Vorteilhaft sind keine nicht lösbaren Verbindungen zwischen den Anlegeelementen 40, 45 und den Hohlwanddosen 10 vorgesehen, welche bei Anwendungen, in denen keine Anlegeelemente 40, 45 vorgesehen sind, aufgetrennt werden müssen.

## Patentansprüche

1. Hohlwanddose (10) mit der Hohlwanddose (10) zugeordneten Anlegeelementen (40, 45) zur Installation in einer Wandausnehmung (51) einer Hohlwand, wobei ein Doseninnenraum von einer Dosenwand (11) begrenzt ist, wobei die Dosenwand (11) entlang der Umfangsrichtung der Hohlwanddose (10) verlaufende erste Wandabschnitte (11.1) und zweite Wandabschnitte (11.2) aufweist, wobei an einem zweiten Wandabschnitt (11.2) entlang der Umfangsrichtung der Hohlwanddose (10) ein oder mehrere nach außen gerichtete Anlegeabschnitte (20, 25) mit Anlegeflächen (21, 26) angeordnet sind, wobei die Anlegeelemente (40, 45) jeweils eine gekrümmt verlaufende Außenfläche (40.1, 45.1) und der Außenfläche (40.1, 45.1) gegenüberliegend angeordnet eine Stoßfläche (41, 46) zur Anlage an einem Anlegeabschnitt (20, 25) an der Dosenwand (11) der Hohlwanddose (10) aufweisen, und wobei im Bereich der Anlegeabschnitte (20, 25) der Hohlwanddose (10) jeweils ein oder mehrere erste Verbindungselemente angeordnet sind, wobei an den Stoßflächen (41, 46) der Anlegeelemente (40, 45) jeweils ein oder mehrere zweite Verbindungselemente angeordnet sind, dass die Verbindungselemente dazu ausgebildet sind, die Anlegeelemente (40, 45) lösbar mit der Hohlwanddose (10) zu verbinden, **dadurch gekennzeichnet, dass** zwei oder mehrere einstückig zu einer Anlegebaugruppe (30) miteinander verbundene Anlegeelemente (40, 45) als Anlegebaugruppe (30) mittels der Verbindungselemente an der Hohlwanddose (10) befestigbar sind, und dass zwischen den Anlegeelementen (40, 45) einer Anlegebaugruppe (30) jeweils zumindest eine Sollbruchstelle angeordnet ist.

2. Hohlwanddose (10) nach Anspruch 1, **dadurch gekennzeichnet, dass** die ersten und zweiten Verbindungselemente dazu ausgebildet sind in einer ersten Verwendung eine Verbindung zwischen zwei Hohlwanddosen (10) und in einer zweiten Verwendung eine Verbindung zwischen einer Hohlwanddose (10) und einem oder mehreren Anlegeelementen (40, 45) herzustellen.

3. Hohlwanddose (10) nach Anspruch 1 oder 2, **dadurch gekennzeichnet, dass** die Verbindungselemente als Gleitführungselemente (22, 47) und dazu korrespondierende Gleitführungsgegenelemente (27, 42) ausgebildet sind, bevorzugt dass die Gleitführungselemente (22, 47) als Federn und die Gleitführungsgegenelemente (27, 42) als zu den Federn korrespondierende Nuten ausgebildet sind, besonders bevorzugt dass die Gleitführungselemente (22, 47) als Federn einer Schwalbenschwanzführung und die Gleitführungsgegenelemente (27, 42) als zu den Federn der Schwalbenschwanzführung korrespondierende Nuten der Schwalbenschwanzführung, ausgebildet sind.

4. Hohlwanddose (10) nach Anspruch 3, **dadurch gekennzeichnet, dass** die an der Hohlwanddose (10) angeordneten ersten Gleitführungselemente (22) und ersten Gleitführungsgegenelemente (27) in Tiefenrichtung (1) der Hohlwanddose (10) derart ausgerichtet sind, dass die Anlegeelemente (40, 45) in Tiefenrichtung (1) auf die Hohlwanddose (10) aufschiebbar sind.

5. Hohlwanddose (10) nach Anspruch 3 oder 4, **dadurch gekennzeichnet, dass** in Umfangsrichtung der Hohlwanddose (10) erste Gleitführungselemente (22) und erste Gleitführungsgegenelemente (27) abwechselnd angeordnet sind.

6. Hohlwanddose (10) nach einem der Ansprüche 3 bis 5, **dadurch gekennzeichnet, dass** einem auf einer Seite der Hohlwanddose (10) angeordneten ersten Gleitführungselement (22) auf der gegenüberliegenden Seite der Hohlwanddose (10) jeweils ein erstes Gleitführungsgegenelement (22) gegenübergestellt ist.

7. Hohlwanddose (10) nach einem der Ansprüche 3 bis 6, **dadurch gekennzeichnet, dass** auf einer Seite der Hohlwanddose (10) benachbarte erste Gleitführungselemente (22) und erste Gleitführungsgegenelemente (22) in einem vorgegebenen Rastermaß zueinander beabstandet sind, vorzugsweise dass auf einer Seite der Hohlwanddose (10) benachbarte erste Gleitführungselemente (22) und erste Gleitführungsgegenelemente (22) in einem Rastermaß von 71mm zueinander beabstandet sind.

8. Hohlwanddose (10) nach einem der Ansprüche 3 bis 7, **dadurch gekennzeichnet, dass** als Federn ausgebildete erste Gleitführungselemente (22) zum vorderen Rand der Hohlwanddose (10) zurückgesetzt angeordnet sind und/oder dass als Nuten ausgebildete erste Gleitführungsgegenelemente (27) zum vorderen Rand der Hohlwanddose (10) hin jeweils in eine zum vorderen Rand der Hohlwanddose (10) hin geöffnete Aussparung (27.1) übergeleitet sind.

9. Hohlwanddose (10) nach einem der Ansprüche 3 bis 8, **dadurch gekennzeichnet, dass** die Einschubbewegung der Anlegeelemente (40, 45) gegenüber der Hohlwanddose (10) in Einschubrichtung durch Anschläge begrenzt ist.

10. Hohlwanddose (10) nach einem der Ansprüche 1 bis 9, **dadurch gekennzeichnet, dass** die Anlegeabschnitte (20, 25) der Hohlwanddose jeweils zumindest eine, vorzugsweise eben ausgebildete Anlegefläche (21, 26) ausbilden, dass die Anlegeelemente (40, 45) dazu jeweils zumindest eine korrespondierende Stoßfläche (41, 46) ausbilden und dass die Verbindungselemente an den Anlegeflächen (21, 26) und Stoßflächen (41, 46) vorzugsweise derart angeordnet sind, dass die Stoßflächen (41,46) plan auf den Anlegeflächen (21, 26) aufliegen und/oder federelastisch gegenüber diesen abgestützt sind.

11. Hohlwanddose (10) nach Anspruch 10, **dadurch gekennzeichnet, dass** die Anlegeflächen (21, 26) der Hohlwanddose (10) in Neigungsflächen (24, 29) übergeleitet sind und dass die zu den Anlegeflächen (21, 26) der Hohlwanddose (10) korrespondierenden Stoßflächen (41, 46) der Anlegeelemente (40, 45) in zu den Neigungsflächen (24, 29) der Hohlwanddose (10) korrespondierende Neigungsflächen (44, 49) übergeleitet sind.

12. Hohlwanddose (10) nach einem der Ansprüche 1 bis 11, **dadurch gekennzeichnet, dass** an den Anlegeelementen (40, 45) jeweils zumindest ein Rastelement (43, 48) und an den Anlegeabschnitten (20) jeweils zumindest ein dazu korrespondierendes Gegenrastelement (23, 28) angeordnet ist.

13. Hohlwanddose (10) nach Anspruch 12, **dadurch gekennzeichnet, dass** zu dem zumindest einen Rastelement (43, 48) und/oder dem zumindest einen Gegenrastelement (23, 28) eine in Einschubrichtung der Verbindungselemente gerichtete Anlaufschräge (23.1, 28.1) geführt ist.

14. Hohlwanddose (10) nach Anspruch 12 oder 13, **dadurch gekennzeichnet, dass** das zumindest eine Rastelement (43, 48) von der Außenfläche (40.1, 45.1) des jeweiligen Anlegeelements (40, 45) zugängig ist.

15. Hohlwanddose (10) nach einem der Ansprüche 1 bis 14, **dadurch gekennzeichnet, dass** die Außenflächen (40.1, 45.1) der Anlegeelemente (40, 45) die gleiche Krümmung aufweisen wie der gekrümmt verlaufende erste Wandabschnitt (11.1) der Hohlwanddose (10) und/oder dass die äußere Oberfläche eines gekrümmt verlaufenden ersten Wandabschnitts (11.1) vorzugsweise stufenlos in die Außenfläche (40.1, 45.1) eines angrenzend an den ersten Wandabschnitt (11.1) mit der Hohlwanddose (10) verbundenen Anlegeelements (40, 45) übergeleitet ist.

16. Hohlwanddose (10) nach einem der Ansprüche 1 bis 15, **dadurch gekennzeichnet, dass** in Tiefenrichtung (1) der Hohlwanddose (10) beabstandet zu wenigstens einem der Anlegeabschnitte (20, 25) eine zu öffnende Durchführung (17) an der Dosenwand (11) vorgefertigt ist, dass die Durchführung (17) von Wandelementen zumindest bereichsweise umgeben ist, dass die Wandelemente um die Durchführung (17) herum Abschlussflächen aufweisen, die auf einer Ebene liegen und die vorzugsweise in die Anlegeflächen (21, 26) übergehen, die besonders bevorzugt auf der gleichen Ebene liegen.

## Claims

1. Hollow wall box (10) with contact elements (40, 45) associated with the hollow wall box (10) for installation in a wall recess (51) of a hollow wall, a box interior being delimited by a box wall (11), the box wall (11) having first wall sections (11.1) and second wall sections (11.2) running along the circumferential direction of the hollow wall box (10), one or more outwardly directed contact sections (20, 25) with contact surfaces (21, 26) being arranged on a second wall section (11.2) along the circumferential direction of the hollow wall box (10), the contact elements (40, 45) each having a curved outer surface (40.1, 45.1) and, arranged opposite the outer surface (40.1, 45.1), an abutment surface (41, 46) for abutment against a contact section (20, 25) on the box wall (11) of the hollow wall box (10), and one or more first connecting elements being arranged in each case in the region of the contact sections (20, 25) of the hollow wall box (10),
wherein one or more second connecting elements are arranged in each case on the abutment surfaces (41, 46) of the contact elements (40, 45), wherein the connecting elements are designed to connect the contact elements (40, 45) releasably to the hollow wall box (10),
**characterised in that**
two or more contact elements (40, 45) connected to one another in one piece to form a contact assembly (30) can be fastened as a contact assembly (30) to the hollow wall box (10) by means of the connecting elements, and **in that** at least one predetermined breaking point is arranged in each case between the contact elements (40, 45) of a contact assembly (30).

2. Hollow wall box (10) according to claim 1, **characterised in that** the first and second connecting elements are designed to produce a connection between two hollow wall boxes (10) in a first use and a connection between a hollow wall box (10) and one or more contact elements (40, 45) in a second use.

3. Hollow wall box (10) according to claim 1 or 2, **characterised in that** the connecting elements are formed as sliding guide elements (22, 47) and sliding guide counter-elements (27, 42) corresponding thereto, preferably **in that** the sliding guide elements (22, 47) are formed as keys and the sliding guide counter-elements (27, 42) are formed as slots corresponding to the keys, particularly preferably that the sliding guide elements (22, 47) are formed as keys of a dovetail guide and the sliding guide counter-elements (27, 42) are formed as slots of the dovetail guide corresponding to the keys of the dovetail guide.

4. Hollow wall box (10) according to claim 3, **characterised in that** the first sliding guide elements (22) and first sliding guide counter-elements (27) arranged on the hollow wall box (10) are aligned in the depth direction (1) of the hollow wall box (10) in such a way that the contact elements (40, 45) can be pushed onto the hollow wall box (10) in the depth direction (1).

5. Hollow wall box (10) according to claim 3 or 4, **characterised in that** first sliding guide elements (22) and first sliding guide counter-elements (27) are arranged alternately in the circumferential direction of the hollow wall box (10).

6. Hollow wall box (10) according to any one of claims 3 to 5, **characterised in that** a first sliding guide element (22) arranged on one side of the hollow wall box (10) is in each case opposed by a first sliding guide counter element (22) on the opposite side of the hollow wall box (10).

7. Hollow wall box (10) according to any one of claims 3 to 6, **characterised in that** on one side of the hollow wall box (10) adjacent first sliding guide elements (22) and first sliding guide counter elements (22) are spaced apart from each other at a predetermined pitch, preferably that on one side of the hollow wall box (10) adjacent first sliding guide elements (22) and first sliding guide counter elements (22) are spaced apart from each other at a pitch of 71 mm.

8. Hollow wall box (10) according to one of the claims 3 to 7, **characterised in that** first sliding guide elements (22) formed as keys are arranged set back from the front edge of the hollow wall box (10) and/or **in that** first sliding guide counter-elements (27) formed as slots are transitioned towards the front edge of the hollow wall box (10) in each case into a recess (27.1) open towards the front edge of the hollow wall box (10).

9. Hollow wall box (10) according to one of the claims 3 to 8, **characterised in that** the insertion movement of the contact elements (40, 45) relative to the hollow wall box (10) in the insertion direction is limited by stops.

10. Hollow wall box (10) according to one of the claims 1 to 9, **characterised in that** the contact sections (20, 25) of the cavity wall box each form at least one, preferably flat contact surface (21, 26), **in that** the contact elements (40, 45) each form at least one corresponding abutment surface (41, 46) thereto, and **in that** the connecting elements are preferably arranged on the contact surfaces (21, 26) and abutment surfaces (41, 46) in such a way that the abutment surfaces (41, 46) rest flat on the contact surfaces (21, 26) and/or are supported resiliently against these.

11. Hollow wall box (10) according to claim 10, **characterised in that** the contact surfaces (21, 26) of the hollow wall box (10) are transitioned into inclined surfaces (24, 29) and that the abutment surfaces (41, 46) of the contact elements (40, 45) corresponding to the contact surfaces (21, 26) of the hollow wall box (10) are transitioned into inclined surfaces (44, 49) corresponding to the inclined surfaces (24, 29) of the hollow wall box (10).

12. Hollow wall box (10) according to one of claims 1 to 11, **characterised in that** at least one latching element (43, 48) is arranged on each of the contact elements (40, 45) and at least one counter-latching element (23, 28) corresponding thereto is arranged on each of the contact portions (20).

13. Hollow wall box (10) according to claim 12, **characterised in that** a run-up bevel (23.1, 28.1) directed in the insertion direction of the connecting elements is guided to the at least one latching element (43, 48) and/or the at least one counter-latching element (23, 28).

14. Hollow wall box (10) according to claim 12 or 13, **characterised in that** the at least one latching element (43, 48) is accessible from the outer surface (40.1, 45.1) of the respective contact element (40, 45).

15. Hollow wall box (10) according to any one of claims 1 to 14, **characterised in that** the outer surfaces (40.1, 45.1) of the contact elements (40, 45) have the same curvature as the curved first wall section (11.1) of the hollow wall box (10) and/or **in that** the outer surface of a curved first wall section (11.1) is preferably continuously transitioned into the outer surface (40.1, 45.1) of a contact element (40, 45) connected to the hollow wall box (10) adjacent to the first wall section (11.1).

16. Hollow wall box (10) according to one of the claims 1 to 15, **characterised in that** in the depth direction (1) of the hollow wall box (10), at a distance from at least one of the contact sections (20, 25), a passage (17) to be opened is prefabricated on the box wall (11), **in that** the passage (17) is surrounded by wall elements at least in regions, **in that** the wall elements around the passage (17) have end surfaces which lie on one plane and which preferably merge into the contact surfaces (21, 26) which particularly preferably lie on the same plane.

## Revendications

1. Boîte à paroi creuse (10) avec des éléments de contact (40, 45) associés à la boîte à paroi creuse (10) pour le montage dans un évidement de paroi (51) d'une paroi creuse, dans laquelle un intérieur de boîte est délimité par une paroi de boîte (11), dans laquelle la paroi de boîte (11) présentant des premières sections de paroi (11.1) et des secondes sections de paroi (11.2) s'étendant dans la direction périphérique de la boîte à paroi creuse (10), dans laquelle un ou plusieurs sections de contact (20, 25) dirigés vers l'extérieur avec des surfaces de contact (21, 26) étant disposés sur une seconde section de paroi (11.2) le long de la direction circonférentielle de la boîte à paroi creuse (10), dans laquelle les éléments de contact (40, 45) ayant chacun une surface extérieure incurvée (40.1, 45.1) et, disposée à l'oppose de la surface extérieure (40.1, 45.1), présentent une surface d'appui (41, 46) pour l'appui contre une section de contact (20, 25) sur la paroi de boîte (11) de la boîte à paroi creuse (10), et dans laquelle à chaque fois un ou plusieurs premiers éléments de liaison étant disposés dans la zone des sections de contact (20, 25) de la boîte à paroi creuse (10),
dans lequel un ou plusieurs seconds éléments de liaison sont disposés respectivement sur les surfaces d'appui (41, 46) des éléments de contact (40, 45), les éléments de liaison conçus pour relier de manière amovible les éléments de contact (40, 45) à la boîte à paroi creuse (10),
**caractérisé en ce que**
deux ou plusieurs éléments de contact (40, 45) reliés entre eux d'un seul tenant pour former un ensemble de contact (30) peuvent être fixés en tant qu'ensemble de contact (30) sur la boîte à paroi creuse (10) au moyen des éléments de liaison, et **en ce qu'**au moins un point de rupture prédéterminé est disposé à chaque fois entre les éléments de contact (40, 45) d'un ensemble de contact (30).

2. Boîte à paroi creuse (10) selon la revendication 1, **caractérisée en ce que** les premier et second éléments de connexion sont conçus pour produire, dans une première utilisation, une connexion entre deux boîtes à paroi creuse (10) et, dans une seconde utilisation, une connexion entre une boîte à paroi creuse (10) et un ou plusieurs éléments de contact (40, 45).

3. Boîte à paroi creuse (10) selon la revendication 1 ou 2, **caractérisée en ce que** les éléments de liaison sont réalisés sous forme d'éléments de guidage coulissants (22, 47) et de contre-éléments de guidage coulissants (27, 42) correspondants, de préférence **en ce que** les éléments de guidage coulissants (22, 47) sont réalisés sous forme de languettes et les contre-éléments de guidage coulissants (27, 42) sont formés comme des rainures correspondant aux languettes, de manière particulièrement préférée **en ce que** les éléments de guidage coulissants (22, 47) sont formés comme des languettes d'un guide en queue d'aronde et les contre-éléments de guidage coulissants (27, 42) sont formés comme des rainures du guide en queue d'aronde correspondant aux languettes du guide en queue d'aronde.

4. Boîte à paroi creuse (10) selon la revendication 3, **caractérisée en ce que** les premiers éléments de guidage coulissants (22) et les premiers contre-éléments de guidage coulissants (27) disposés sur la boîte à paroi creuse (10) sont alignés dans la direction de la profondeur (1) de la boîte à paroi creuse (10) de telle sorte que les éléments de contact (40, 45) peuvent être poussés sur la boîte à paroi creuse (10) dans la direction de la profondeur (1).

5. Boîte à paroi creuse (10) selon la revendication 3 ou 4, **caractérisée en ce que** des premiers éléments de guidage coulissants (22) et des premiers contre-éléments de guidage coulissants (27) sont disposés alternativement dans la direction circonférentielle de la boîte à paroi creuse (10).

6. Boîte à paroi creuse (10) selon l'une quelconque des revendications 3 à 5, **caractérisée en ce qu'**un premier élément de guidage coulissant (22) disposé sur un côté de la boîte à paroi creuse (10) est à chaque fois opposé à un premier contre-élément de guidage coulissant (22) sur le côté opposé de la boîte à paroi creuse (10).

7. Boîte à paroi creuse (10) selon l'une quelconque des revendications 3 à 6, **caractérisée en ce que**, sur un côté de la boîte à paroi creuse (10), des premiers éléments de guidage coulissants (22) adjacents et des premiers contre-éléments de guidage coulissants (22) sont espacés les uns des autres selon un pas prédéterminé, de préférence **en ce que**, sur un côté de la boîte à paroi creuse (10), des premiers éléments de guidage coulissants (22) adjacents et des premiers contre-éléments de guidage coulissants (22) sont espacés les uns des autres selon un pas de 71 mm.

8. Boîte à paroi creuse (10) selon l'une des revendications 3 à 7, **caractérisée en ce que** des premiers éléments de guidage coulissants (22) réalisés sous forme de languettes sont disposés en retrait par rapport au bord avant de la boîte à paroi creuse (10) et/ou **en ce que** des premiers contre-éléments de guidage coulissants (27) réalisés sous forme de rainures sont transférés chacun vers le bord avant de la boîte à paroi creuse (10) dans un évidement (27.1) ouvert vers le bord avant de la boîte à paroi creuse (10).

9. Boîte à paroi creuse (10) selon l'une des revendications 3 à 8, **caractérisée en ce que** le mouvement d'insertion des éléments de contact (40, 45) par rapport à la boîte à paroi creuse (10) dans la direction d'insertion est limité par des butées.

10. Boîte à paroi creuse (10) selon l'une quelconque des revendications 1 à 9, **caractérisée en ce que** les sections de contact (20, 25) de la boîte à paroi creuse forment chacune au moins une surface de contact (21, 26), qui est de préférence plate, **en ce que** les éléments de contact (40, 45) forment chacun au moins une surface d'appui correspondante (41, 46), et **en ce que** les éléments de liaison sont de préférence disposés sur les surfaces de contact (21, 26) et les surfaces d'appui (41, 46) de telle sorte que les surfaces d'appui (41, 46) reposent à plat sur les surfaces de contact (21, 26) et/ou sont supportées de manière élastique par rapport à celles-ci.

11. Boîte à paroi creuse (10) selon la revendication 10, **caractérisée en ce que** les surfaces de contact (21, 26) de la boîte à paroi creuse (10) sont transformées en surfaces inclinées (24, 29) et **en ce que** les surfaces d'appui (41, 46) des éléments de contact (40, 45) correspondant aux surfaces de contact (21, 26) de la boîte à paroi creuse (10) sont transformées en surfaces inclinées (44, 49) correspondant aux surfaces inclinées (24, 29) de la boîte à paroi creuse (10).

12. Boîte à paroi creuse (10) selon l'une des revendications 1 à 11, **caractérisée en ce qu'**au moins un élément d'encliquetage (43, 48) est disposé sur chacun des éléments de contact (40, 45) et au moins un élément de contre-encliquetage (23, 28) correspondant est disposé sur chacune des sections de contact (20).

13. Boîte à paroi creuse (10) selon la revendication 12, **caractérisée en ce qu'**un chanfrein d'attaque (23.1, 28.1) orienté dans la direction d'insertion des éléments de liaison est guidé vers l'au moins un élément d'encliquetage (43, 48) et/ou l'au moins un élément d'encliquetage correspondant (23, 28).

14. Boîte à paroi creuse (10) selon la revendication 12 ou 13, **caractérisée en ce que** l'au moins un élément d'encliquetage (43, 48) est accessible depuis la surface extérieure (40.1, 45.1) de l'élément de contact respectif (40, 45).

15. Boîte à paroi creuse (10) selon l'une quelconque des revendications 1 à 14, **caractérisée en ce que** les surfaces extérieures (40.1, 45.1) des éléments de contact (40, 45) ont la même courbure que la première partie de paroi incurvée (11. 1) de la boîte à paroi creuse (10) et/ou **en ce que** la surface extérieure d'une première section de paroi incurvée (11.1) se transforme de préférence de manière continue en la surface extérieure (40.1, 45.1) d'un élément de contact (40, 45) relié à la boîte à paroi creuse (10) adjacent à la première section de paroi (11.1).

16. Boîte à paroi creuse (10) selon l'une des revendications 1 à 15, **caractérisée en ce que** dans la direction de la profondeur (1) de la boîte à paroi creuse (10), à distance d'au moins l'une des sections de contact (20, 25), un passage (17) à ouvrir est préfabriqué sur la paroi de boîte (11), **en ce que** le passage (17) est entouré au moins par zones par des éléments de paroi, **en ce que** les éléments de paroi présentent autour du passage (17) des surfaces d'extrémité qui se trouvent sur un plan et se transforment de préférence en surfaces de contact (21, 26) qui se trouvent de préférence sur le même plan avion.
